# EUROPEAN PATENT APPLICATION

(11) **EP 4 556 535 A1**
(43) Date of publication of application: **21.05.2025**
(21) Application number: 23209622.2
(22) Date of filing: 14.11.2023
(51) Int. Cl.: C09D 11/101, C03C 15/00, C09D 11/38, C23F 1/02

(54) **AN ETCH RESIST INKJET INK**

(71) Applicant: AGFA-GEVAERT NV, 2640 Mortsel (BE)
(72) Inventor: CORTES SALAZAR, Fernando, 2640 Mortsel (BE); LOCCUFIER, Johan, 2640 Mortsel (BE)
(74) Representative: Viaene, Kris

(57) **Abstract**

An etch resist inkjet ink comprising:
- one or more photoinitiators, wherein at least one photoinitiator is a thioxantone compound,
- one or more acrylamides according to Formula I, 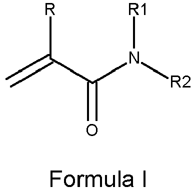 wherein
R represents H or CH₃;
R₁ and R₂ independently from each other represent an optionally substituted alkyl group;
R₁ and R₂ may represent the necessary atom to form a 5 or 6 membered ring;

- one or more polymerizable compounds according to Formula II, and 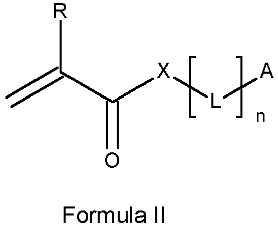 wherein
X = O, S or NH;
R = H or CH₃;
L is an optionally substituted one to five atomic group divalent linking group;
n is 0 or 1; and
A is an optionally substituted aromatic group;

- one or more polyfunctional (meth)acrylates.

## Description

### Technical field of the invention

The present invention relates to an etch resist inkjet ink, in particular for manufacturing Printed Circuit Boards (PCBs).

### Background art for the invention

The manufacture of Printed Circuit Boards (PCBs) traditionally involves an extensive process including multiple photolithographic and etching steps, thereby generating a lot of waste. In order to reduce the amount of process steps, production costs and waste, there is an increased interest in digitalizing the PCB manufacturing workflow.

Inkjet printing is a preferred digital manufacturing technology for several PCB production steps, such as the application of the etch resist and the solder mask, or printing of the legend.

In PCB manufacturing an etch resist inkjet ink is used to form the copper circuitry. An etch resist inkjet ink is applied on a copper laminate (i.e. copper clad) to form a mask. Copper is then removed from the copper clad where no mask is present followed by the removal of the mask in a so-called stripping step.

EP-A 2809735 (AGFA-GEVAERT NV) discloses an etch resist inkjet ink and a method of manufacturing a PCB using that inkjet ink.

EP-A 3201277 (AGFA-GEVAERT NV) and EP-A 32011278 (AGFA-GEVAERT NV) disclose a digital manufacturing method of respectively metallic articles and an embossing element for decorative surfaces. Both methods use an etch resist inkjet ink, for example as disclosed in EP-A 2915856 (AGFA-GEVAERT NV) or EP-A 3000853 (AGFA-GEVAERT NV).

Other etch resist inkjet inks are disclosed in JP-A 2016/102138 and JP-A 2016/191010 (both from GOO CHEMICAL CO LTD).

Printed circuit boards (PCBs) can come in many varieties, with one of those being high current PCBs, also called heavy copper PCBs. These units have some useful characteristics for applications with high currents and variable temperatures. Heavy copper PCBs can resist higher temperatures for longer periods while handling higher rates of electrical current and providing stronger connection points.

Such high current PCBs are typically used in equipment or devices that need a lot of power, such as electrical vehicles or solar power converters.

The unique design of these PCBs features a thicker, heavier layer of copper that gives the PCB its durable characteristics. Typical thicknesses of the copper layers are from 300 to 800 µm.

A suitable etch resist inkjet ink on the one hand has to withstand the etching conditions while on the other hand has to be completely removed during the stripping step. The thicker copper layers of high current PCBs require longer etching times. It has now been observed that state of the art etch resist inkjet inks do no withstand such long etching times. It has also been observed that improving the adhesion of the etch resist inkjet inks to copper in order to withstand the longer etching times typically result in a worse stripping behavior, i.e. no complete removal during the stripping step.

There is thus a need for an etch resist inkjet ink with which optimal results may be obtained in the manufacture of high current PCBs.

### Summary of the invention

It is an object of the invention to provide an etch resist inkjet ink for the manufacture of high current PCBs.

That object of the invention is realized by the inkjet ink according to claim 1.

It is another object of the invention to provide a digital manufacturing method of high current PCBs. That object the invention is realized by the manufacturing method according to claim 13.

Further objects of the invention will become apparent from the description hereinafter.

### Detailed description of the invention

### Definitions

The term "monofunctional" in e.g. monofunctional polymerizable compound means that the polymerizable compound includes one polymerizable group.

The term "difunctional" in e.g. difunctional polymerizable compound means that the polymerizable compound includes two polymerizable groups.

The term "polyfunctional" in e.g. polyfunctional polymerizable compound means that the polymerizable compound includes more than two polymerizable groups.

The term "alkyl" means all variants possible for each number of carbon atoms in the alkyl group i.e. methyl, ethyl, for three carbon atoms: n-propyl and isopropyl; for four carbon atoms: n-butyl, isobutyl and tertiary-butyl; for five carbon atoms: n-pentyl, 1,1-dimethylpropyl, 2,2-dimethylpropyl and 2-methyl-butyl, etc.

Unless otherwise specified a substituted or unsubstituted alkyl group is preferably a C₁ to C₆-alkyl group.

Unless otherwise specified a substituted or unsubstituted alkenyl group is preferably a C₂ to C₆-alkenyl group.

Unless otherwise specified a substituted or unsubstituted alkynyl group is preferably a C₂ to C₆-alkynyl group.

Unless otherwise specified a substituted or unsubstituted alkaryl group is preferably a phenyl or naphthyl group including one, two, three or more C₁ to C₆-alkyl groups.

Unless otherwise specified a substituted or unsubstituted aralkyl group is preferably a C₇ to C₂₀-alkyl group including a phenyl group or naphthyl group.

Unless otherwise specified a substituted or unsubstituted aryl group is preferably a phenyl group or naphthyl group.

Unless otherwise specified a substituted or unsubstituted heteroaryl group is preferably a five- or six-membered ring substituted by one, two or three oxygen atoms, nitrogen atoms, sulphur atoms, selenium atoms or combinations thereof.

The term "substituted", in e.g. substituted alkyl group means that the alkyl group may be substituted by other atoms than the atoms normally present in such a group, i.e. carbon and hydrogen. For example, a substituted alkyl group may include a halogen atom or a thiol group. An unsubstituted alkyl group contains only carbon and hydrogen atoms.

Unless otherwise specified a substituted alkyl group, a substituted alkenyl group, a substituted alkynyl group, a substituted aralkyl group, a substituted alkaryl group, a substituted aryl and a substituted heteroaryl group are preferably substituted by one or more constituents selected from the group consisting of methyl, ethyl, n-propyl, isopropyl, n-butyl, isobutyl and tertiary-butyl, ester, amide, ether, thioether, ketone, aldehyde, sulfoxide, sulfone, sulfonate ester, sulphonamide, -Cl, -Br, -I, -OH, -SH, -CN and -NO₂.

### Etch resist Inkjet Ink

The etch resist inkjet ink according to the present invention comprises:
- one or more photoinitiators, wherein at least one photoinitiator is a thioxanthone compound,
- one or more (meth)acrylamides according to Formula I, 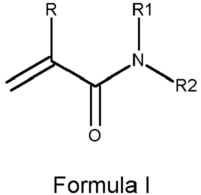 wherein
   R = H or CH₃;
   R₁ and R₂ independently from each other represent an optionally substituted alkyl group;
   R₁ and R₂ may represent the necessary atom to form a 5 or 6 membered ring;
- one or more polymerizable compounds according to Formula II, and 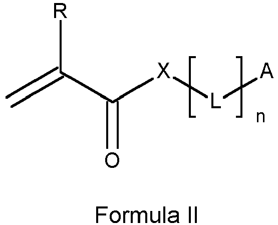 wherein
   X = O, S or NH, preferably O;
   R = H or CH₃, preferably H;
   L is an optionally substituted one to five atomic group divalent linking group;
   n is 0 or 1, and
   A is an optionally substituted aromatic group, preferably a phenyl group,
- one or more polyfunctional (meth)acrylates.

According to a preferred embodiment the etch resist inkjet ink further includes one or more acid group containing (meth)acrylates.

### (Meth)acrylamide according to Formula I

The etch resist inkjet ink according to the present invention includes one or more (meth)acrylamides according to Formula I, 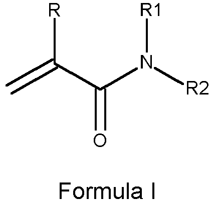 wherein
R is H or CH₃, preferably H,
R₁ and R₂ independently from each other represent H, an optionally substituted alkyl group, or may represent the necessary atoms to form a 5 or 6 membered ring.

The alkyl group is preferably a C1-C6, more preferably a C1-C3 alkyl group. Highly preferred alkyl groups are selected from the group consisting of methyl, ethyl, propyl, butyl, i-propyl, i-butyl and t-butyl.

Preferred (meth)acrylamides according to Formula I are listed in Table 1 without being limited thereto.

**Table 1**

| **Chemical Formula** | **reference N°** |
|---|---|
| 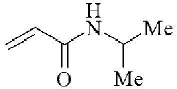 | AA-1 |
| 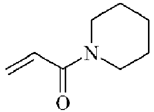 | AA-2 |
| 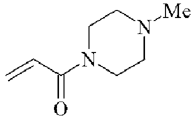 | AA-3 |
| 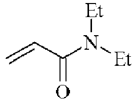 | AA-4 |
| 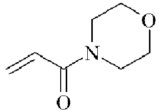 | AA-5 |
| 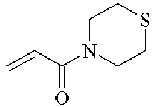 | AA-6 |
| 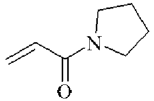 | AA-7 |

The etch resist inkjet ink may comprise two or more (meth)acrylamide according to Formula I.

The total amount of (meth)acrylamides according to Formula I is preferably from 5 to 75 wt%, preferably from 10 to 60 wt%, most preferably from 15 to 45 wt%, all relative to the total weight in the inkjet ink.

In a preferred embodiment of the etch resist inkjet ink, at least one of the acryl amide is a cyclic acryl amide. A preferred cyclic acryl amide is acryloyl morpholine.

In a most preferred embodiment of the etch resist inkjet jet, the acryl amide is selected from acryloyl morpholine and diethyl acrylamide.

### Polymerizable compound according to Formula II

The etch resist inkjet ink according to the present invention comprises one or more polymerizable compounds according to Formula II, 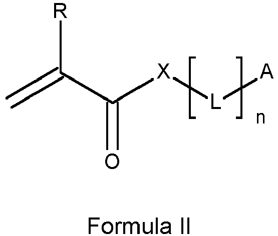 wherein
X = O, S or NH, preferably O;
R = H or CH₃, preferably H;
L is an optionally substituted one to five atomic group divalent linking group;
n is 0 or 1, and
A is an optionally substituted aromatic group, preferably a phenyl group.

Preferred compounds according to Formula II are listed in Table 2 without being limited thereto.

**Table 2**

| **Chemical Formula** | **Reference N°** |
|---|---|
| 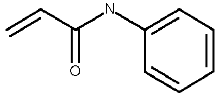 | II-1 |
| 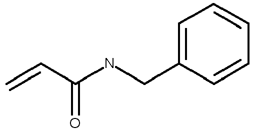 | II-2 |
| 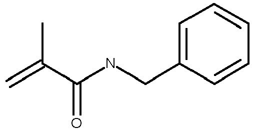 | II-3 |
| 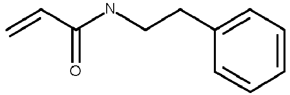 | II-4 |
| 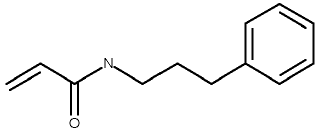 | II-5 |
| 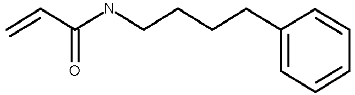 | II-6 |
| 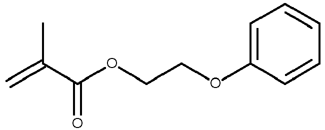 | II-7 |
| 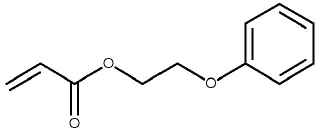 | II-8 |
| 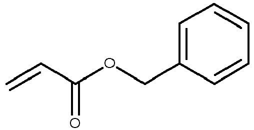 | II-9 |
| 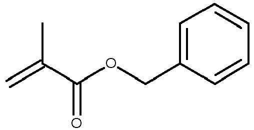 | II-10 |
| 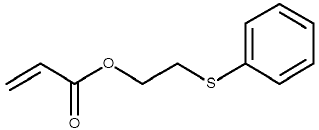 | II-11 |
| 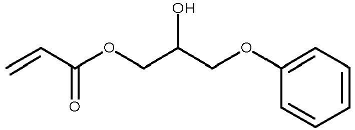 | II-12 |

The etch resist inkjet ink may comprise two or more polymerizable compounds according to Formula II.

The total amount of polymerizable compounds according to Formula II is preferably from 2.5 to 50 wt%, more preferably from 5 to 40 wt%, most preferably from 10 to 30 wt%, all relative to the total weight of the inkjet ink.

In a most preferred embodiment of the etch resist inkjet jet, the polymerizable compound according to Formula II is 2-phenoxyethyl acrylate (PEA).

### Polyfunctional (meth) acrylates

The etch resist inkjet ink according to the present invention includes one or more polyfunctional (meth)acrylates, preferably one or more polyfunctional acrylates. A polyfunctional (meth)acrylate referred to herein is a polymerizable compound including two or more (meth)acrylate groups.

A single polyfunctional acrylate or a mixture of polyfunctional acrylates may be used.

The total amount of polyfunctional (meth)acrylates is preferably from 1 to 50 wt%, more preferably from 2.5 to 25 wt%, most preferably from 5 to 15 wt%, all relative to the total weight of the inkjet ink.

In a preferred embodiment, the polyfunctional acrylate is selected from the group consisting of dipropylene glycol diacrylate, neopentylglycol diacrylate , neopentyl-glycol (2x propoxylated) diacrylate, penta erythritol tetraacrylate, 1,6-hexanediol diacrylate, trimethylolpropane triacrylate, ethoxylated trimethylolpropane triacrylate, tripropylene glycol diacrylate, ditrimethyloylpropane tetraacrylate, ethoxylated pentaerythritol tetraacrylate, and polyethyleneglycol diacrylate.

In a highly preferred embodiment of the etch resist inkjet ink, the polyfunctional acrylate includes tripropylene glycol diacrylate

### Acid group containing (meth)acrylates

The etch resist inkjet ink preferably includes one or more (meth)acrylates containing a carboxylic acid group, a phosphoric acid group or a phosphonic acid group.

It has been observed that the presence of a (meth)acrylate containing a carboxylic acid group, a phosphoric acid group or a phosphonic acid group results in an improved adhesion of the cured etch resist inkjet ink on copper during the etching step.

Suitable examples of a carboxylic acid group-containing monofunctional (meth)acrylate include a compound represented by the Formula III, 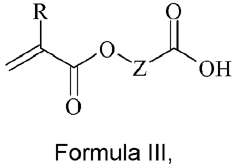 wherein
R represents H or CH₃, preferably H; and
Z represents a divalent organic group.

Preferred divalent organic groups Z are those according to Formula IV,

-CH₂-CH₂-O-CO-Z'-(COOH)ₘ Formula IV

wherein Z' represents a substituted or unsubstituted phenyl ring and m represents an integer from 1 to 3.

Preferred examples of a (meth)acrylate containing a carboxylic acid group are discloses in Table 3 without being limited thereto.

**Table 3**

| **Chemical Formula** | **Reference N°** |
|---|---|
| 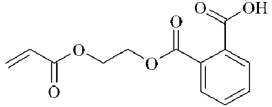 | MC-1 |
| 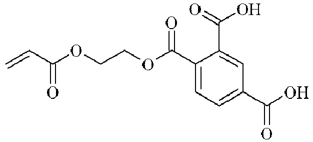 | MC-2 |
| 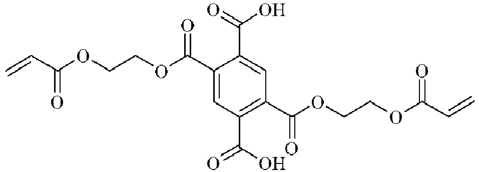 | MC-3 |
| 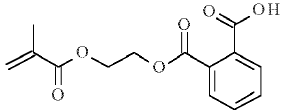 | MC-4 |
| 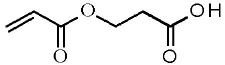 | MC-5 |

The inkjet ink may include two or more different (meth)acrylates containing a carboxylic acid group, a phosphoric acid group or a phosphonic acid group.

The total amount of (meth)acrylates containing a carboxylic acid group, a phosphoric acid group or a phosphonic acid group is preferably from 0.5 to 25 wt%, more preferably from 2.5 to 15 wt%, most preferably from 5 to 10 wt%, all relative to the total weight of the inkjet ink.

Preferred (meth)acrylates containing a carboxylic acid group are 2-acryloxy ethyl phthalate and carboxyethyl acrylate.

Preferred examples of the (meth)acrylate containing a phosphoric acid group or a phosphonic acid group include 2-(methacryloyloxy)ethyl phosphate, 2-hydroxyethyl methacrylate phosphate, bis[2-(methacryloyloxy)ethyl)]phosphate.

Preferred examples of the (meth)acrylate containing a phosphoric acid group are compounds according to Formula P-1 or P-2, 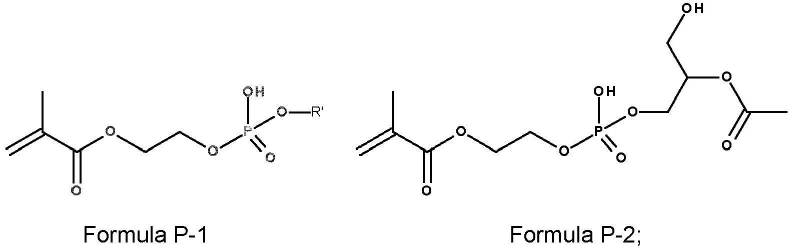 wherein R' represents CnH₂ₙ₊₁ with n representing an integer between 6 and 18.

Preferred examples of the (meth)acrylate containing a phosphoric acid group are disclosed in Table 4 without being limited thereto.

**Table 4**

| | |
|---|---|
| MP-1 | 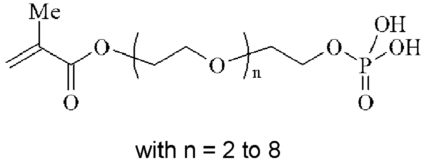 |
| MP-2 | 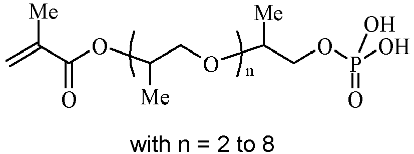 |
| MP-3 | 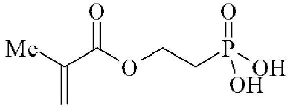 |

In a particularly preferred embodiment of the etch resist inkjet ink, the (meth)acrylate containing a carboxylic acid group, a phosphoric acid group or a phosphonic acid group is selected from the group consisting of 2-carboxyethyl acrylate, 2-acryloyl ethyl succinate, 2-acryloxy ethyl phthalate and 2-hydroxyethyl methacrylate phosphate, more preferably from the group consisting of 2-carboxy-ethyl acrylate and 2-acryloxy ethyl phthalate.

### Other polymerizable compounds

Other polymerizable compounds than the ones disclosed above may be present in the etch resist inkjet ink in an amount of preferably 0 to 20 wt%, more preferably in an amount up to 15 wt% and most preferably in an amount of up to 10 wt% with all weight percentages (wt%) based on the total weight of the polymerizable composition.

The other polymerizable compounds preferably consist of one or more monomers, oligomers and/or prepolymers. These monomers, oligomers and/or prepolymers may possess different degrees of functionality. A mixture including combinations of mono-, di-, tri-and higher functionality monomers, oligomers and/or prepolymers may be used.

Particularly preferred other monomers and oligomers are those listed in [0106] to [0115] in EP-A 1911814 (AGFA) .

According to a preferred embodiment of the inkjet ink, the other polymerizable compound is hydroxyphenyl methacrylate.

### Photoinitiators

The etch resist inkjet ink according to the present invention includes one or more photoinitiators, preferably free radical photoinitiators, wherein at least one photoinitiator is a thioxanthone compound.

It has been observed that the presence of a thioxanthone compound as photoinitiator results in improved curing properties (UV sensitivity) of the etch resist inkjet ink.

Preferred thioxanthone compounds are listed in the following Table 5 without being limited thereto.

**Table 5**

| | |
|---|---|
| 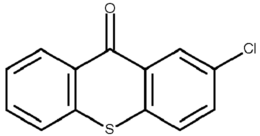 | THIOX-01 |
| 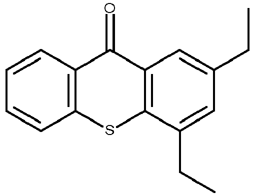 | THIOX-02 |
| 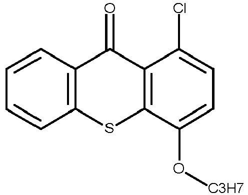 | THIOX-03 |
| 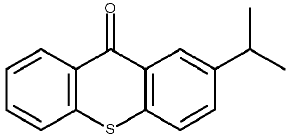 | THIOX-04 |
| 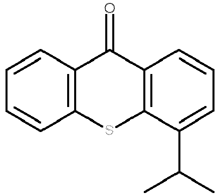 | THIOX-05 |
| 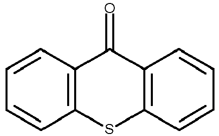 | THIOX-06 |

In a particularly preferred embodiment of the etch resist inkjet ink, the thioxanthone compound is Darocur^{™} ITX, an isomeric mixture of 2- and 4-isopropyl-thioxanthone (THIOX-04 and THIOX-05). It has been observed that the presence of a thioxanthone photoinitiator such as Darocur^{™} ITX in the inkjet ink according to the present invention boost the top curing of printed layers, which result in less tacky layers.

The amount of such thioxanthone photoinitiators is preferably from 0.5 to 20 wt%, more preferably from 1 to 10 wt%, most preferably from 2 to 6 wt%, all relative to the total weight of the inkjet ink.

The inkjet ink may include in addition to the thioxanthone compound one or more other photoinitiators.

Suitable photoinitiators are disclosed in CRIVELLO, J.V., et al. Photoinitiators for Free Radical, Cationic and Anionic Photopolymerization. 2nd edition. Edited by BRADLEY, G. London, UK: John Wiley and Sons Ltd, 1998. p.276-293.

The inkjet ink according to the present invention preferably includes an acylphosphine oxide photoinitiator. The acylphosphine oxide compound may be selected from the group consisting of a mono-acylphosphine oxide and a di-acylphosphine oxide.

Preferred acylphosphine oxide photoinitiators are selected from the group consisting of diphenyl(2,4,6-trimethylbenzoyl)phosphine oxide (TPO), ethyl phenyl(2,4,6-trimethylbenzoyl) phosphinate (TPO-L), phenylbis(2,4,6-trimethyl-benzoyl)phosphine oxide (BAPO), bis (2,6-dimethyl-benzoyl)-(2,4,4-trimethyl-pentyl)phosphine oxide and 2,4,6-trimethoxy-benzoyl-diphenylphosphine oxide. Particularly preferred acylphosphine oxide photoinitiators are selected from the group consisting of BAPO, TPO and TPO-L.

The amount of such acylphosphine oxide photoinitiators is preferably from 0.5 to 20 wt%, more preferably from 1 to 10 wt%, most preferably from 2 to 6 wt%, all relative to the total weight of the inkjet ink.

A preferred embodiment of the inkjet ink includes both a thioxanthone type photoinitiator and an acylphosphine oxide type photoinitiator. A highly preferred embodiment includes ITX and BAPO or ITX, BAPO and TPO-L.

Other preferred photoinitiators are α-hydroxy-ketone Type I photoinitiators such as for example oligo[2-hydroxy-2-methyl-1-[4-(1-methylvinyl-phenyl]propanone] available as Esacure^{®} KIP IT from IGM resins.

In order to increase the photosensitivity further, the curable inkjet composition may additionally contain co-initiators. Suitable examples of co-initiators can be categorized in three groups:
(1) tertiary aliphatic amines such as methyldiethanolamine, dimethylethanolamine, triethanolamine, triethylamine and N-methylmorpholine;
(2) aromatic amines such as amylparadimethyl-aminobenzoate, 2-n-butoxyethyl-4-(dimethylamino)benzoate, 2-(dimethylamino)ethyl benzoate, ethyl-4-(dimethyl-amino)benzoate and 2-ethylhexyl-4-(dimethylamino)benzoate; and
(3) (meth)acrylated amines such as dialkylamino alkyl(meth)acrylates (e.g., diethyl-aminoethylacrylate) or N-morpholinoalkyl-(meth)acrylates (e.g., N-morpholinoethyl-acrylate).

Preferred co-initiators are aminobenzoates.

A preferred low molecular aminobenzoate is Genocure^{®} EPD from RAHN.

Particularly preferred aminobenzoate co-initiators are selected from the group consisting of polymerizable, oligomeric and polymeric aminobenzoate co-initiators.

Polymerizable co-initiators are disclosed in EP-A 2033949 (AGFA NV).

In a more preferred embodiment, the aminobenzoate co-initiators are oligomeric aminobenzoate derivatives.

Particularly preferred aminobenzoates are polyether derivatives of aminobenzoates, wherein the polyether is selected from the group consisting of poly(ethylene oxide), polypropylene oxide), copolymers thereof, and poly(tetrahydrofuran), ethoxylated or propoxylated neopentyl glycol, ethoxylated or propoxylated trimethylpropane and ethoxylated or propoxylated pentaerythritol.

Preferred oligomeric aminobenzoates are disclosed in WO1996/33157 (LAMBSON FINE CHEMICALS Ltd.) and WO2011/030089 (SUN CHEMICALS BV). Typical examples of polyethylene glycol bis p-dimethylaminobenzoate are OMNIPOL ASA, commercially available from IGM Resins and Speedcure 7040, commercially available from Lambson Fine Chemicals.

Other oligomeric or polymeric co-initiators are for example ESACURE A 198, a polyfunctional amine from IGM and SARTOMER^{®} CN3755, an acrylated amine co-initiator from ARKEMA.

The amount of co-initiators is preferably from 0.5 to 15 wt%, more preferably from 1 to 10 wt%, most preferably from 2.5 to 7.5 wt%, all relative to the total weight of the inkjet ink.

### Colorants

The etch resist inkjet may be a substantially colourless inkjet ink, but preferably the inkjet ink includes at least one colorant. The colorant makes the temporary mask clearly visible to the manufacturer of for example conductive patterns, allowing a visual inspection of quality.

The colorant in the inkjet ink may be a pigment or a dye, but is preferably a dye that is not bleached by the UV curing step.

The pigments may be black, white, cyan, magenta, yellow, red, orange, violet, blue, green, brown, mixtures thereof, and the like. A colour pigment may be chosen from those disclosed by HERBST, Willy, et al. Industrial Organic Pigments, Production, Properties, Applications. 3rd edition. Wiley - VCH , 2004. ISBN 3527305769.

Suitable pigments are disclosed in paragraphs [0128] to [0138] of WO2008/074548 (AGFA NV) .

Pigment particles in inkjet inks should be sufficiently small to permit free flow of the ink through the inkjet-printing device, especially at the ejecting nozzles. It is also desirable to use small particles for maximum colour strength and to slow down sedimentation. Most preferably, the average pigment particle size is no larger than 150 nm. The average particle size of pigment particles is preferably determined with a Brookhaven Instruments Particle Sizer BI90plus based upon the principle of dynamic light scattering.

Generally dyes exhibit a higher light fading than pigments but cause no problems on jettability. It was found that anthraquinone dyes exhibit only minor light fading under the normal UV curing conditions used in an inkjet printing process.

In a preferred embodiment, the colorant in the etch resist inkjet ink is an anthraquinone dye, such as Macrolex^{™} Blue 3R (CASRN 325781-98-4) from LANXESS.

Other preferred dyes include crystal violet and a copper phthalocyanine dye.

The amount of the colorant is preferably from 0.25 to 5.0 wt%, more preferably from 0.5 to 2.5 wt%, both based on the total weight of the inkjet ink.

### Polymeric Dispersants

If the colorant in the etch resist inkjet ink is a pigment, then inkjet ink preferably contains a dispersant, more preferably a polymeric dispersant, for dispersing the pigment.

Suitable polymeric dispersants are copolymers of two monomers but they may contain three, four, five or even more monomers. The properties of polymeric dispersants depend on both the nature of the monomers and their distribution in the polymer. Copolymeric dispersants preferably have the following polymer compositions:
- statistically polymerized monomers (e.g. monomers A and B polymerized into ABBAABAB);
- alternating polymerized monomers (e.g. monomers A and B polymerized into ABABABAB);
- gradient (tapered) polymerized monomers (e.g. monomers A and B polymerized into AAABAABBABBB);
- block copolymers (e.g. monomers A and B polymerized into AAAAABBBBBB) wherein the block length of each of the blocks (2, 3, 4, 5 or even more) is important for the dispersion capability of the polymeric dispersant;
- graft copolymers (graft copolymers consist of a polymeric backbone with polymeric side chains attached to the backbone); and
- mixed forms of these polymers, e.g. blocky gradient copolymers.

Suitable polymeric dispersants are listed in the section on "Dispersants", more specifically [0064] to [0070] and [0074] to [0077] in EP-A 1911814 (AGFA NV).

### Polymerization Inhibitors

The etch resist inkjet ink may contain at least one inhibitor for improving the thermal stability of the ink.

Suitable polymerization inhibitors include phenol type antioxidants, hindered amine light stabilizers, phosphor type antioxidants, hydroquinone monomethyl ether commonly used in (meth)acrylate monomers, and hydroquinone. t-Butylcatechol, pyrogallol, 2,6-di-tert.butyl-4-methylphenol (BHT) and phenothiazine may also be used.

The inhibitor is preferably a polymerizable inhibitor.

Since excessive addition of these polymerization inhibitors may lower the curing speed, it is preferred that the amount capable of preventing polymerization is determined prior to blending. The amount of a polymerization inhibitor is preferably lower than 5 wt%, more preferably lower than 3 wt% relative to the total weight of the inkjet ink.

### Surfactants

The etch resist inkjet ink may contain at least one surfactant, but preferably no surfactant is present.

The surfactant can be anionic, cationic, non-ionic, or zwitter-ionic and is usually added in a total quantity less than 1wt% based on the total weight of the radiation curable inkjet ink.

Suitable surfactants include fluorinated surfactants, fatty acid salts, ester salts of a higher alcohol, alkylbenzene sulfonate salts, sulfosuccinate ester salts and phosphate ester salts of a higher alcohol (for example, sodium dodecyl-benzenesulfonate and sodium dioctylsulfosuccinate), ethylene oxide adducts of a higher alcohol, ethylene oxide adducts of an alkylphenol, ethylene oxide adducts of a polyhydric alcohol fatty acid ester, and acetylene glycol and ethylene oxide adducts thereof.

Preferred surfactants are selected from fluoric surfactants (such as fluorinated hydrocarbons) and silicone surfactants. The silicone surfactants are preferably siloxanes and can be alkoxylated, polyether modified, polyether modified hydroxy functional, amine modified, epoxy modified and other modifications or combinations thereof. Preferred siloxanes are polymeric, for example polydimethylsiloxanes.

Preferred commercial silicone surfactants include BYK^{™} 333 and BYK^{™} UV3510 from BYK Chemie and Tego^{®}glide from Evonik Industries.

In a preferred embodiment, the surfactant is a polymerizable compound.

Preferred polymerizable silicone surfactants include a (meth)acrylated silicone surfactant. Most preferably the (meth)acrylated silicone surfactant is an acrylated silicone surfactant, because acrylates are more reactive than methacrylates.

In a preferred embodiment, the (meth)acrylated silicone surfactant is a polyether modified (meth)acrylated polydimethylsiloxane or a polyester modified (meth)acrylated polydimethylsiloxane.

The amount of surfactant is preferably from 0 to 3 wt%, more preferably from 0.01 to 1 wt%,all based on the total weight of the radiation curable inkjet ink.

### Flame retardant

The etch resist inkjet ink may include a flame retardant.

Preferred flame retardants are inorganic flame retardants, such as Alumina Trihydrate and Boehmite, and organo-phosphor compounds, such as organo-phosphates (e.g. triphenyl phosphate (TPP), resorcinol bis (diphenylphosphate) (RDP), bisphenol A diphenyl phosphate (BADP), and tricresyl phosphate (TCP)); organo-phosphonates (e.g. dimethyl methylphosphonate (DMMP)); and organo-phosphinates (e.g. aluminium dimethylphosphinate).

Other preferred organo-phosphor compounds are disclosed in US8273805.

### Preparation of Inkjet Inks

The preparation of pigmented radiation curable inkjet inks is well-known to the skilled person. Preferred methods of preparation are disclosed in paragraphs [0076] to [0085] of WO2011/069943 (AGFA NV).

### Method of chemical milling

The method of chemical milling according to the present invention uses the inkjet ink described above as etch resist inkjet ink.

Chemical milling, also referred to as industrial etching, is a subtractive manufacturing process using baths of temperature-regulated etching chemicals to remove material to create an object with a desired shape.

The method of chemical milling may be used to manufacture decorative elements or precision elements. Such a method is disclosed in for example EP-A 3201277 (AGFA-GEVAERT NV).

In still another embodiment, the method of chemical milling is used to manufacture decorative etched glass panels. Such a method is disclosed in for example WO2013/189762 (AGC) and EP-A 3210946 (AGFA-GEVAERT NV).

The method of chemical milling according to the present invention includes the steps of:
a) forming a protected area on a metal or glass surface by jetting and curing the etch resist inkjet ink as described above,
b) removing metal or glass from an unprotected area of the metal or glass surface by etching, and
c) removing at least partially the cured inkjet ink from the protected area of the metal or glass surface.

### Method of manufacturing a Printed Circuit Board (PCB)

The method of manufacturing a PCB according to the present invention uses the inkjet ink described above as etch resist inkjet ink.

The method include the steps of:
a) forming a protected area on a metal surface by jetting and curing the etch resist inkjet ink as described above,
b) removing metal from an unprotected area of the metal surface by etching, and
c) removing at least partially the cured inkjet ink from the protected area of the metal surface.

In PCB manufacturing, a metal foil or sheet is used to form a conductive circuitry. The metal sheet may be attached to a substrate.

There is no limitation on the nature of the metal surface. The metal surface preferably consists of copper, aluminum, nickel, iron, tin, titanium or zinc, but may be also alloys including these metals. In a preferred embodiment, the metal surface is made of copper. Copper has a high electrical conductivity and is a relatively cheap metal, making it very suitable for making printed circuit boards.

The metal sheet for standard PCBs typically has thickness from 35 to 105 µm. The metal sheet for high current PCBs typically has a thickness of more than 150 µm, preferably from 300 to 800 µm.

The metal sheet or foil is typically attached to a substrate.

There is no real limitation on the type of substrate as long as it is non-conductive. The substrates may be made of a ceramic, glass or plastics, or even a second (cheaper) metal plate. The metal may also be an alloy.

The substrate is a dielectric material most commonly composed of epoxy resin and glass fiber weave (sometimes unwoven). The substrate material chosen will determine the mechanical, thermal, and chemical properties of the circuit board.

The most widely used substrate for PCB manufacturing is FR-4. It is composed of a glass reinforced epoxy laminate sheet. The epoxy resin is fireproof, water resistant and does not absorb moisture.

Ceramic-based substrates are also used, especially for a better thermal performance. Polyimide-based substrates are typically used for flexible PCBs.

For heavy copper PCBs, the substrate may range from standard FR-4 with an operating temperature of 130°C to more advanced materials with extremely high glass temperatures (Tg).

The metal surface is preferably cleaned before printing etch resist inkjet ink. This is especially desirable when the metal surface is handled by hand and no gloves are worn. The cleaning removes dust particles and grease which can interfere in the adhesion of the inkjet ink to the metal surface. In PCB the copper surface is often cleaned by micro-etching. The oxide layer of the copper is removed and roughness introduced in order to improve the adhesion.

### Etching step

An etch resist is provided on a metal or glass surface by applying and curing the etch resist inkjet ink as described above on the metal or glass surface thereby forming a cured image on the metal or glass surface. Metal or glass from the metal or glass surface not covered by the cured image is then removed by etching.

Two methods of wet etching are typically used in PCB manufacturing dependent on the etchants used: acidic etching or alkaline etching. In the PCB manufacturing according to the present invention acidic etching is preferably used.

The etchant for acidic etching is preferably an aqueous solution having a pH of less than 3, more preferably of less than 2. The acid etchant preferably includes at least one acid selected from the group consisting of nitric acid, picric acid, hydrochloric acid, hydrofluoric acid and sulphuric acid.

The etchant for alkaline etching is preferably an aqueous solution having a pH from 8 to 10, preferably a pH of no more than 9. The alkaline etchant preferably includes at least one base selected from the group consisting of ammonia or ammonium hydroxide, potassium hydroxide and sodium hydroxide.

The etchant preferably contains a metal salt such as copper dichloride, copper sulphate, potassium ferricyanide and iron trichloride, preferably copper dichloride.

For PCB manufacturing etching times depend on the amount of copper that has to be removed. In the production of high current PCBs, the etching times will typically be longer than those for manufacturing standard PCBs.

Etching times for standard PCBs are typically from 1 to 15 minutes, for high current PCBs typically from 30 to 45 minutes.

Etching is preferably performed at a temperature from 30 to 50°C.

For chemical milling or etching of glass, different etchants and etching conditions may be used, as described in respectively EP-A 3201277 (AGFA-GEVAERT NV) and EP-A 3210946 (AGFA GEVAERT NV).

Etching is preferably followed by rinsing with water to remove any residual etchant.

### Stripping step

After etching, the cured etch resist inkjet ink must at least partially be removed from the metal or glass surface, so that e.g. electric or electronic devices can make contact with the remaining metal surface (conductive pattern) or that the decorative feature of an etched metal panel becomes fully visible. For example, an electronic component such as a transistor must be able to make electrical contacts with the conductive (copper) pattern on the printed circuit board. In a preferred embodiment, the cured etch resist inkjet ink is completely removed from the metal surface.

In a preferred embodiment, the cured etch resist inkjet ink is removed from the protected area by an alkaline stripping bath. Such an alkaline stripping bath is preferably an aqueous solution, more preferably an aqueous sodium hydroxide solution, with a pH > 10. The stripping step is preferably carried out at a temperature between 30 and 50°C.

### Inkjet Printing Devices

The etch resist inkjet ink according to the present invention may be jetted by one or more print heads ejecting small droplets in a controlled manner through nozzles onto a substrate, which is moving relative to the print head(s).

A preferred print head for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the print head creating a void, which is then filled with ink. When the voltage is again removed, the ceramic expands to its original shape, ejecting a drop of ink from the print head. However the inkjet printing method according to the present invention is not restricted to piezoelectric inkjet printing. Other inkjet print heads can be used and include various types, such as a continuous type.

The inkjet print head normally scans back and forth in a transversal direction across the moving ink-receiver surface. Often the inkjet print head does not print on the way back. Bi-directional printing is preferred for obtaining a high areal throughput. Another preferred printing method is by a "single pass printing process", which can be performed by using page wide inkjet print heads or multiple staggered inkjet print heads which cover the entire width of the ink-receiver surface. In a single pass printing process the inkjet print heads usually remain stationary and the ink-receiver surface is transported under the inkjet print heads.

### Curing Devices

The etch resist inkjet ink can be cured by exposing them to actinic radiation, such as electron beam or ultraviolet radiation. Preferably the inkjet ink is cured by ultraviolet radiation, more preferably using UV LED curing.

In inkjet printing, the curing means may be arranged in combination with the print head of the inkjet printer, travelling therewith so that the curable liquid is exposed to curing radiation very shortly after been jetted.

In such an arrangement, with the exception of UV LEDs, it can be difficult to provide a small enough radiation source connected to and travelling with the print head. Therefore, a static fixed radiation source may be employed, e.g. a source of curing UV-light, connected to the radiation source by means of flexible radiation conductive means such as a fiber optic bundle or an internally reflective flexible tube.

Alternatively, the actinic radiation may be supplied from a fixed source to the radiation head by an arrangement of mirrors including a mirror upon the radiation head.

The source of radiation may also be an elongated radiation source extending transversely across the substrate to be cured. It may be adjacent the transverse path of the print head so that the subsequent rows of images formed by the print head are passed, stepwise or continually, beneath that radiation source.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
- UV-A: 400 nm to 320 nm
- UV-B: 320 nm to 290 nm
- UV-C: 290 nm to 100 nm.

In a preferred embodiment, the etch resist inkjet ink is cured by UV LEDs. The inkjet printing device preferably contains one or more UV LEDs preferably with a wavelength larger than 360 nm, preferably one or more UV LEDs with a wavelength larger than 380 nm, and most preferably UV LEDs with a wavelength of about 395 nm.

Furthermore, it is possible to cure the ink image using, consecutively or simultaneously, two light sources of differing wavelength or illuminance. For example, the first UV-source can be selected to be rich in UV-C, in particular in the range of 260 nm-200 nm. The second UV-source can then be rich in UV-A, e.g. a gallium-doped lamp, or a different lamp high in both UV-A and UV-B. The use of two UV-sources has been found to have advantages e.g. a fast curing speed and a high curing degree.

For facilitating curing, the inkjet printing device often includes one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels are usually maintained as low as 200 ppm, but are generally in the range of 200 ppm to 1200 ppm.

### EXAMPLES

### Materials

All materials used in the following examples were readily available from standard sources such as ALDRICH CHEMICAL Co. (Belgium) and ACROS (Belgium) unless otherwise specified. The water used was deionized water.

**SR606A** is neopentylglycol hydroxypivalate diacrylate available as Sartomer^{™} SR606A from ARKEMA.

**AA-4** is diethyl acrylamide from KJ Chemicals Corporation.

**AA-5** is acryloyl morpholine from RAHN.

**ITX** is an isomeric mixture of 2- and 4-isopropylthioxanthone available as **Darocur^{™} ITX** from BASF.

**TPO** is 2,4,6-trimethylbenzoyl-diphenyl-phosphineoxide, a photoinitiator available as Darocur^{™} TPO from BASF.

**TPO-L** is ethyl phenyl(2,4,6-trimethylbenzoyl)phosphinate commercially available as SpeedCure TPO-L from ARKEMA.

**EPD** is ethyl 4-dimethyaminobenzoate available as Genocure^{™} EPD from RAHN.

**MC-4** is (2-acryloyloxyethyl) phthalate from ARKEMA.

**MC-5** is 2-carboxyethyl acrylate from ALDRICH.

**INHIB** is a mixture forming a polymerization inhibitor having a composition according to Table 6.

**Table 6**

| **Component** | **wt%** |
|---|---|
| DPGDA | 82.4 |
| p-methoxyphenol | 4.0 |
| 2,6-di-tert-butyl-methylphenol | 10.0 |
| Cupferron^{™} AL | 3.6 |

**Cupferron^{™} AL** is aluminum N-nitrosophenylhydroxylamine from WAKO CHEMICALS LTD.

**DYE-1** is a blue anthraquinone dye available as Macrolex^{™} Blue 3R from LANXESS.

**TEGO 410** is a polyether siloxane surfactant, commercially available as TEGO^{®}Glide from EVONIK.

The **CuCl₂ etch solution** is a solution of 34.9 g copper(2) chloride hydrate in 80 g distilled water with 17 g HCl (37%).

**II-1** is N-phenyl acrylamide from Chemosyntha BV.

**II-2** is N-benzyl acrylamide from Chemosyntha BV.

**II-3** is N-benzyl methacrylamide prepared according to Abel et al. (Macromolecules (Washington, DC, United States), 49(2), 465-474 (2016)).

II-4 is N-(2-phenylethyl) acrylamide prepared as disclosed in WO2010086211 (Agfa Graphics NV).

**II-6** is N-(4-phenylbutyl) acrylamide prepared as described below.

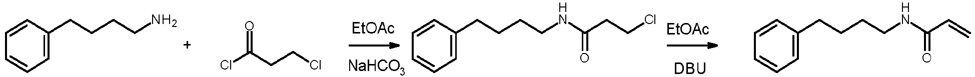

### 3-chloro-N-(4-phenylbutyl)propanamide

14.29 g (0.1 mol) 4-phenylbutylamine was dissolved in 150 ml ethyl acetate. A solution of 9 g (0.107 mol) sodium bicarbonate in 180 ml water was added and the mixture was cooled to 0°C. A solution of 13.96 g (0.11 mol) 3-chloropropionyl chloride in 30 ml ethyl acetate was added while vigorously stirring and maintaining the temperature at 0°C. The reaction was allowed to continue for one hour. The ethyl acetate fraction was isolated, dried over MgSO₄ and evaporated under reduced pressure. 23.5 g (y : 98 %) of the crude 3-chloro-N-(4-phenylbutyl)- propanamide was isolated and used in the second step without intermediate purification.

### N-(4-phenylbutyl) acrylamide

23 g (0.096 mol) 3-chloro-N-(4-phenylbutyl)propanamide was dissolved in 130 ml ethyl acetate. 21.9 g (0.144 mol) DBU (1,8-Diazabicyclo[5.4.0]undec-7-ene) was added and the reaction was allowed to continue at room temperature for two hours, followed by further reaction for 90 minutes at 50°C. The reaction mixture was allowed to cool down to room temperature and the precipitated salts were removed by filtration. The solvent was removed under reduced pressure and the crude N-(4-phenylbutyl) acrylamide was purified by preparative column chromatography on a SVP D40 flash column, supplied by Merck (eluent : methylene chloride). 13.3 g (y : 68%) of N-(4-phenylbutyl) acrylamide was isolated (TLC analysis on a TLC Silica gel 60 F₂₅₄ plate, supplied by Merck, eluent methylene chloride/methanol 98/2 : R_{f} : 0.3).

**II-7** is 2-phenoxy ethyl methacrylate from Arkema.

**II-8** is 2-phenoxy ethyl acrylate from IGM Resins.

**II-9** is benzyl acrylate from ABCR GmbH & Co.

**II-10** is benzyl methacrylate from Sigma-Aldrich N.V.

**II-11** is 2-phenyl thioethylacrylate from Bimax Chemicals Ltd.

**II-12** is 2-hydroxy-3-phenoxypropyl acrylate and is commercially available as Sartomer CN131B.

### Methods

### Pretreatment substrate

A Cu clad (EM-825(I) CAF Resistant 0.152 mm) available from CCI EUROLAM was used as substrate in the examples. The substrate was pretreated for 20 seconds at 25°C with a MECBrite^{™} CA-95MH acid pretreatment solution available from MEC Europe.

### Printing and Curing

Examples 1 to 3 were printed on the substrate described above using a MicroCraft CPS2013 printer equipped with KM1024i SHE printheads from Konica Minolta (4 passes, 1440x1440 dpi) at a temperature from 40 to 55 °C. The temperature was adjusted to 45 °C. Printing speed was 20 inch/s; UV curing with a 12 W LED (395 nm) was performed using 100 % of the total power of the LED in all print passes with 2 additional UV curing passes (100% power of the LED) at the end of the printing process.

Example 4 was printed on the substrate described above using a MicroCraft CPS2013 printer equipped with KM1024i SHE printheads from Konica Minolta (4 passes, 1440x1440 dpi) at a temperature from 40 to 55 °C. The temperature was adjusted to 45 °C. Printing speed was 20 inch/s; UV curing with a 12 W LED (395 nm) was performed using 100 % of the total power of the LED in all print passes. No additional UV curing passes were applied at the end of the printing process.

### Etching

Etching was carried out in a Rotaspray (Model RS-1210 from Mega Electronics) using a CuCl₂ etching solution during 15 minutes at 50 °C.

### Stripping

In examples 1 to 3, stripping was carried out in a Rotaspray using a 5 wt% NaOH solution during 4 minutes at 50°C.

In example 4, stripping was carried out using a 5 wt% NaOH solution at 50 °C during varying stripping times.

### Etch Resistance

Etch resistance was evaluated after etching. An etched copper plate was rinsed with water and visually inspected. The following evaluation was used:
0 = no detaching of the cured ink
1 = little detaching of the cured ink (around 25 %)
2 = a lot of detaching of the cured ink (around 50 %)
3 = almost everything of the cured ink was detached (75 - 100 %)

For manufacturing PCBs, the etch resistance is preferably less than 2.

### Strippability

In examples 1 to 3, the strippability was visually evaluated after 4 minutes of stripping process. The following evaluation was used:
0 = all (100 %) UV cured ink was stripped from the copper plate
1 = A lot (50 - 75 %) of UV cured ink was stripped from the copper plate
2 = little (around 25 %) UV cured ink was stripped from the copper plate
3 = almost no UV cured ink was stripped from the copper plate

For manufacturing PCBs, the strippability is preferably less than 2.

In example 4, the strippability was visually evaluated by the following evaluation grading:
0.5 = all the UV cured ink was removed in 20 seconds,
1.0 = all the UV cured ink was removed in 40 seconds,
1.5 = all the UV cured ink was removed in 60 seconds,
3.0 = all the UV cured ink was removed in 120 seconds,

For manufacturing PCBs, the strippability is preferably less than 3.

### UV sensitivity

The UV (LED) sensitivity was evaluated on 10 µm coatings of the inkjet ink on a PET substrate. Curing was carried out with 1 pass 200 % LED at 20 m/min. The following evaluation was used after UV exposure of the samples and rubbing with a cotton swab with moderate pressure.
0 = No wipe visible;
0.5 = Wipe visible only on the ink coating; no sweep visible on non-coated substrate;
1.0 = Wipe visible on the ink coating and the non-coated substrate.

For manufacturing PCBs, the UV sensitivity is preferably less than 1.

### Viscosity

The viscosity of the inks was measured at 45 °C and at a shear rate of 1000 s⁻¹ using a "Robotic Viscometer Type VISCObot" from CAMBRIDGE APPLIED SYSTEMS.

For industrial inkjet printing, the viscosity at 45 °C and at a shear rate of 1000 s⁻¹ is preferably between 5.0 and 15 mPa.s. More preferably the viscosity at 45 °C and at a shear rate of 1 000 s⁻¹ is less than 15 mPa.s.

### Example 1

The comparative inkjet ink COMP-1 and inventive inkjet ink INV-2 were prepared according to Table 7. The weight percentages (wt%) are all based on the total weight of the radiation curable composition.

**Table 7**

| **Ingredient (wt%)** | **COMP-1** | **INV-1** |
|---|---|---|
| **AA-5** | 37.5 | 32.05 |
| **II-8** | - | 10 |
| **SR606A** | 42.55 | 38 |
| **MC-5** | 3 | 3 |
| **MC-4** | 4 | 4 |
| **INHIB** | 1 | 1 |
| **ITX** | 4 | 4 |
| **EPD** | 4 | 4 |
| **TPO** | 2.95 | 2.95 |
| **DYE-1** | 1 | 1 |

The inkjet inks COMP-1 and INV-1were then printed, cured as described above. The etch resistance and strippability evaluated as described above are shown in Table 8

**Table 8**

| | **COMP-1** | **INV-1** |
|---|---|---|
| **Etch Resistance** | 2 | 0 |
| **Strippability** | 1 | 0 |

From Table 8 it is clear that the inventive ink INV-1 including a polymerizable compound according to Formula II has an improved etch resistance compared to an inkjet ink without such a compound while the strippability remains sufficient.

### Example 2

The inventive inkjet inks INV-2 to INV-7 were prepared according to Table 9.

The weight percentages (wt%) are all based on the total weight of the radiation curable composition.

**Table 9**

| **Ingredients (wt%)** | **INV-2** | **INV-3** | **INV-4** | **INV-5** | **INV-6** | **INV-7** |
|---|---|---|---|---|---|---|
| **AA-5** | 37.05 | 27.05 | 22.05 | 35.05 | 36.05 | 39.05 |
| **II-8** | 5 | 15 | 20 | 10 | 10 | 10 |
| **SR606A** | 38 | 38 | 38 | 38 | 38 | 38 |
| **MC-5** | 3 | 3 | 3 | x | 3 | x |
| **MC-4** | 4 | 4 | 4 | 4 | x | x |
| **INHIB** | 1 | 1 | 1 | 1 | 1 | 1 |
| **ITX** | 4 | 4 | 4 | 4 | 4 | 4 |
| **EPD** | 4 | 4 | 4 | 4 | 4 | 4 |
| **TPO** | 2.95 | 2.95 | 2.95 | 2.95 | 2.95 | 2.95 |
| **DYE-1** | 1 | 1 | 1 | 1 | 1 | 1 |

The inkjet inks INV-2 to INV-7 were then printed and cured as described above. The etch resistance and strippability evaluated as described above are shown in Table 10.

**Table 10**

| | **INV-2** | **INV-3** | **INV-4** | **INV-5** | **INV-6** | **INV-7** |
|---|---|---|---|---|---|---|
| **Etch Resistance** | 1 | 0 | 0 | 1 | 1 | 1.5 |
| **Strippability** | 1 | 0 | 0 | 1 | 0 | 0 |

It is clear from Table 10 that all inventive inks including a polymerizable compound according to Formula II have an improved etch resistance compared to an inkjet ink without such a compound II (COMP-01) while the strippability remains sufficient. It is also clear that the etch resistance improves when the amount of the polymerizable compound according to Formula II increases.

From Table 10 it is also clear that both MC-4 and MC-5, monofunctional acrylates containing a carboxylic group, have an influence on the etch resistance (INV-5 and INV-6). However, even in the absence of such an acrylate (INV-7), the etch resistance remains sufficient when the ink comprises a polymerizable compound according to Formula II.

### Example 3

The inventive inkjet inks INV-8 to INV-17 were prepared according to Table 11. The weight percentages (wt%) are all based on the total weight of the radiation curable composition.

**Table 11**

| **Ingredient (wt %)** | INV-8 | INV-9 | INV-10 | INV-11 | INV-12 | INV-13 | INV-14 | INV-15 | INV-16 | INV-17 |
|---|---|---|---|---|---|---|---|---|---|---|
| **AA-5** | 32 | 32 | 32 | 32 | 32 | 32 | 32 | 32 | 32 | 32 |
| **II-9** | 10 | - | - | - | - | - | - | - | - | - |
| **II-10** | - | 10 | - | - | - | - | - | - | - | - |
| **II-3** | - | - | 10 | - | - | - | - | - | - | - |
| **II-11** | - | - | - | 10 | - | - | - | - | - | - |
| **II-12** | - | - | - | - | 10 | - | - | - | - | - |
| **II-1** | - | - | - | - | - | 10 | - | - | - | - |
| **II-2** | - | - | - | - | - | - | 10 | - | - | - |
| **II-4** | - | - | - | - | - | - | - | 10 | - | - |
| **II-6** | - | - | - | - | - | - | - | - | 10 | - |
| **II-7** | - | - | - | - | - | - | - | - | - | 10 |
| **SR606A** | 38 | 38 | 38 | 38 | 38 | 38 | 38 | 38 | 38 | 38 |
| **MC-5** | 3 | 3 | 3 | 3 | 3 | 3 | 3 | 3 | 3 | 3 |
| **MC-4** | 4 | 4 | 4 | 4 | 4 | 4 | 4 | 4 | 4 | 4 |
| **INHIB** | 1 | 1 | 1 | 1 | 1 | 1 | 1 | 1 | 1 | 1 |
| **ITX** | 4 | 4 | 4 | 4 | 4 | 4 | 4 | 4 | 4 | 4 |
| **EPD** | 4 | 4 | 4 | 4 | 4 | 4 | 4 | 4 | 4 | 4 |
| **TPO** | 2.95 | 2.95 | 2.95 | 2.95 | 2.95 | 2.95 | 2.95 | 2.95 | 2.95 | 2.95 |
| **DYE-1** | 1 | 1 | 1 | 1 | 1 | 1 | 1 | 1 | 1 | 1 |

The inkjet inks INV-8 to INV-17 were then printed and cured as described above. The etch resistance and strippability evaluated as described above are shown in Table 12.

**Table 12**

| | **INV-8** | **INV-9** | **INV-10** | **INV-11** | **INV-12** | **INV-13** | **INV-14** | **INV-15** | **INV-16** | **INV-17** |
|---|---|---|---|---|---|---|---|---|---|---|
| **Etch Resistance** | 0 | 0 | 0 | 0 | 0 | 0 | 0 | 0 | 0 | 0 |
| **Strippability** | 1 | 0 | 0 | 1 | 1 | 0 | 0 | 0 | 0 | 1 |

It is clear from Table 12 that all inks INV-8 to INV-17 comprising a polymerizable compound according to Formula II have an improved etch-resistance combined with a sufficient strippability.

### Example 4

The comparative inkjet inks COMP-2 to COMP-4 and the inventive inkjet inks INV-18 to INV-24 were prepared according to Table 13. The weight percentages (wt%) are all based on the total weight of the radiation curable composition.

**Table 13**

| **Ingredient (wt%)** | **INV-18** | **COMP-2** | **INV-19** | **INV-20** | **INV-21** |
|---|---|---|---|---|---|
| **AA-4** | 15 | 15 | 15 | - | 7.5 |
| **AA-5** | 12.5 | 16.5 | 14.5 | 12.5 | 12.5 |
| **II-8** | 30.8 | 30.8 | 30.8 | 30.8 | 30.8 |
| **SR606A** | 8.5 | 8.5 | 8.5 | 23.5 | 16 |
| **MC-5** | 16 | 16 | 16 | 16 | 16 |
| **MC-4** | 4 | 4 | 4 | 4 | 4 |
| **INHIB** | 1 | 1 | 1 | 1 | 1 |
| **BAPO** | 4.7 | 4.7 | 4.7 | 4.7 | 4.7 |
| **ITX** | 4 | - | 2 | 4 | 4 |
| **TPO-L** | 2.5 | 2.5 | 2.5 | 2.5 | 2.5 |
| **DYE-1** | 1 | 1 | 1 | 1 | 1 |
| **TEGO 410** | 0.02 | 0.02 | 0.02 | 0.02 | 0.02 |

| **Ingredient (wt%)** | **INV-22** | **INV-23** | **COMP-3** | **COMP-4** | **INV-24** |
|---|---|---|---|---|---|
| **AA-4** | 15 | 15 | **-** | 15 | 15 |
| **AA-5** | - | 6 | - | 21 | 17 |
| **II-8** | 30.78 | 30.78 | 30.78 | 30.78 | 30.78 |
| **SR606A** | 21 | 15 | 36 | - | 4 |
| **MC-5** | 16 | 16 | 16 | 16 | 16 |
| **MC-4** | 4 | 4 | 4 | 4 | 4 |
| **INHIB** | 1 | 1 | 1 | 1 | 1 |
| **BAPO** | 4.7 | 4.7 | 4.7 | 4.7 | 4.7 |
| **ITX** | 4 | 4 | 4 | 4 | 4 |
| **TPO-L** | 2.5 | 2.5 | 2.5 | 2.5 | 2.5 |
| **DYE-1** | 1 | 1 | 1 | 1 | 1 |
| **TEGO 410** | 0.02 | 0.02 | 0.02 | 0.02 | 0.02 |

The inkjet inks were then printed and cured as described above. The etch resistance, strippability and curing efficiency were evaluated as described above are shown in Table 14.

**Table 14**

| | **INV-18** | **COMP-2** | **INV-19** | **INV-20** | **INV-21** |
|---|---|---|---|---|---|
| **Etch Resistance** | 0 | 0 | 0 | 1 | 1 |
| **Strippability** | 0.5 | 0.5 | 0.5 | 1 | 0.5 |
| **UV sensitivity** | 0 | 1 | 0.5 | 0.5 | 0.5 |

| | **INV-22** | **INV-23** | **COMP-3** | **COMP-4** | **INV-24** |
|---|---|---|---|---|---|
| **Etch Resistance** | 1.5 | 1.5 | 1.5 | 2 | 1 |
| **Strippability** | 0.5 | 1 | 1.5 | 1.5 | 1.5 |
| **UV sensitivity** | 0.5 | 0.5 | 1 | 0.5 | 0.5 |

The results in Table 14 clearly show that:
- Inkjet inks without a thioxanthone photoinitiator have an insufficient UV sensitivity (COMP-2). The amount of the thioxanthone photoinitiator influences the UV sensitivity (INV-18; INV-19).
- Inkjet inks without an acrylamide according to Formula 1 have an insufficient UV sensitivity (COMP-3). The amount of the acrylamide influences the UV sensitivity, etch resistance and/or strippability (INV-20 to INV-23).
- Inkjet inks without a polyfunctional (meth)acrylate have an insufficient etch resistance and strippability (COMP-4). The amount of polyfunctional (meth)acrylate influences the etch resistance and strippability (INV-24).

## Claims

1. An etch resist inkjet ink comprising:
- one or more photoinitiators, wherein at least one photoinitiator is a thioxanthone compound,
- one or more acrylamides according to Formula I, 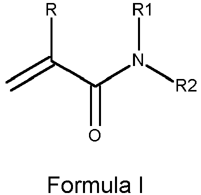 wherein
R represents H or CH₃;
R₁ and R₂ independently from each other represent an optionally substituted alkyl group;
R₁ and R₂ may represent the necessary atom to form a 5 or 6 membered ring;
- one or more polymerizable compounds according to Formula II, and 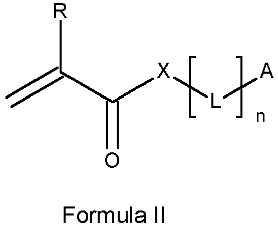 wherein
X = O, S or NH,
R = H or CH₃,
L is an optionally substituted one to five atomic group divalent linking group;
n is 0 or 1; and
A is an optionally substituted aromatic group;
- one or more polyfunctional (meth)acrylates.

2. The etch resist inkjet ink according to claim 1 wherein at least one photoinitiator is an acylphosphine oxide compound.

3. The etch resist inkjet ink according to claim 1 or 2 wherein the amount of thioxanthone compound is from 1 to 10 wt%, relative to the total weight of the inkjet ink.

4. The etch resist inkjet ink according to any of the preceding claims wherein the amount of acylphosphine oxide compound is from 1 to 10 wt%, relative to the total weight of the inkjet ink.

5. The etch resist inkjet ink according to any of the preceding claims wherein the compounds according to Formula I are selected from 4-acryloylmorpholine (ACMO) and diethyl acrylamide.

6. The etch resist inkjet ink according to any of the preceding claims wherein the total amount of compounds according to Formula I is from 25 to 60 wt% relative to the total weight of the inkjet ink.

7. The etch resist inkjet ink according to any of the preceding claims wherein the compound according to Formula II is phenoxyethyl acrylate (PEA).

8. The etch resist inkjet ink according to any of the preceding claims wherein the total amount of compounds according to Formula II is from 2.5 to 25 wt%.

9. The etch resist inkjet ink according to any of the preceding claims further comprising one or more acid group containing (meth)acrylates.

10. The etch resist inkjet ink according to claim 9 wherein the amount of acid group containing (meth)acrylate is from 2.5 to 25 wt%, relative to the total weight of the inkjet ink.

11. The etch resist inkjet according to any of the preceding claims wherein the total amount of polyfunctional (meth)acrylates is from 2.5 to 25 wt%.

12. A method of inkjet printing including the steps of:
a) forming a protected area on a metal of glass surface by jetting and curing an etch resist inkjet ink as defined in any of the claims 1 to 11;
b) removing metal or glass from an unprotected area of the metal or glass surface by etching; and
c) removing at least partially the cured inkjet ink from the protected area of the metal of glass surface.

13. The inkjet printing method as defined in claim 12 to manufacture a Printed Circuit Board (PCB).

14. The inkjet printing method according to claim 13 wherein the PCB is a high current PCB.

15. The use of the etch resist inkjet ink as defined in any of the claims 1 to 11 to manufacture a PCB.
